# EUROPEAN PATENT SPECIFICATION

(11) **EP 1 920 015 B1**
(45) Date of publication and mention of the grant of the patent: **23.12.2009**
(21) Application number: 07789257.8
(22) Date of filing: 20.08.2007
(51) Int. Cl.: C09D 11/00

(54) **INK-JET PRINTING PROCESS, INK AND COLORANT**
TINTENSTRAHLDRUCKVERFAHREN, TINTE UND FÄRBEMITTEL
PROCÉDÉ D'IMPRESSION JET D'ENCRE, ENCRE ET COLORANT

(30) Priority: 26.08.2006 GB 0616908; 02.06.2007 GB 0710580
(43) Date of publication of application: 14.05.2008
(73) Proprietor: FUJIFILM Imaging Colorants Limited, Blackley, Manchester M9 8ZS (GB)
(72) Inventor: WRIGHT, Gavin, Manchester M9 8ZS (GB)
(74) Representative: Parlett, Peter Michael
(86) International application number: PCT/GB2007/003151
(87) International publication number: WO 2008/025949

(56) References cited:
- EP-A- 0 159 291
- GB-A- 1 243 748
- US-A- 3 870 697
- US-A- 3 889 271

## Description

This invention relates to compounds which are useful as colorants, to inks (especially but not exclusively ink jet printing inks) containing said compounds, to a process for printing said ink on a substrate and to the use of said compounds for preparing ink jet printing inks.

Ink jet printing (hereinafter IJP) is a non-impact printing technique in which droplets of ink are ejected through a fine nozzle onto a substrate without bringing the nozzle into contact with the substrate.

There are many demanding performance requirements for colorants and inks used in IJP. For example, they desirably provide sharp, non-feathered images having good water-fastness, light-fastness, ozone-fastness and optical density. The inks are often required to dry quickly when applied to a substrate to prevent smudging, but they should not form a crust over the tip of an ink jet nozzle because this will tend to reduce print quality and in extreme cases may prevent the printer from printing. The inks are preferably also stable to storage over time without decomposing or forming a precipitate which could block the fine nozzle. Because water is commonly a major component of an IJP ink, and the pH of the ink is often alkaline it is particularly important that the colorants used in IJP are hydrolytically stable.

In the field of ink jet very few documents disclose the use of azo compounds containing diamide residues.

EP 0 159 291 discloses tris azo dyes containing a diamide residue.

WO 2005/066289 A1 discloses a comparative dye at page 141 which contains a diamide residue.

We have found that amide containing azo compounds are prone to alkaline hydrolysis at the amide group.

We have also found that certain azo compounds containing amide residues and carboxylic acid groups in certain positions are particularly useful as colorants for IJP inks. In particular, we have found that when one or more of the carboxylic acid group(s) are attached in a position near the amide groups this provides a colorant compound having one or more of the aforementioned desirable properties.

According to a first aspect of the present invention there is provided a process for printing an image on a substrate comprising applying to the substrate an ink comprising a medium and compound of Formula (1) or a salt thereof: 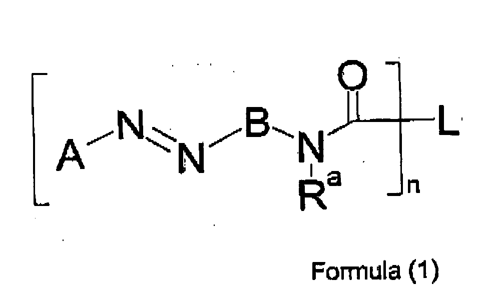 wherein:
- A and X: independently are optionally substituted aryl or heteroaryl;
- B: is optionally substituted arylene or heteroarylene;
- L: is an organic linking group;
- R^{a} and R^{b}: independently are H, optionally substituted alkyl or optionally substituted aryl;
- n: is 2;
the compound of Formula (1) has only 2 azo groups and contains at least one carboxylic acid group and one or more of the carboxylic acid group(s) are attached to the compound of Formula (1) in one or more of the groups represented by B in an ortho position with respect to the NR^{a}- group.

### A

The groups represented by A may be different but are preferably the same.

Each of the groups represented by A may independently be either polycyclic (e.g. naphthyl) or monocyclic (e.g. phenyl).

Preferred polycyclic heteroaryl groups comprise a phenyl ring condensed with a 5- or 6- membered ring containing one or more nitrogen, sulphur, oxygen or phosphorus atoms in the 5- or 6- membered ring (e.g. an indole group).

Preferred monocyclic heteroaryl groups are those comprising a 5- or 6-membered ring containing one or more nitrogen, sulphur, oxygen or phosphorus atoms. Preferred examples include pyridine, pyrimidine, pyrazole, pyrrole, imidazole, furan and thiophene.

Preferably, at least one of the groups represented by A is aryl, more preferably all the groups represented by A are aryl.

Preferred polycyclic aryl groups include anthracyl, pyrenyl, phenanthrenyl and especially naphthyl. The preferred monocyclic aryl group is phenyl.

It is especially preferred that all the groups represented by A are either naphthyl or phenyl.

When A is naphthyl, the naphthyl group may be attached to the -N=N-group in the compound of Formula (1) in the 1-naphthyl position but is more preferably attached in the 2-naphthyl position.

More preferably, when A is naphthyl, it is a naphthyl group of Formula (2) or a salt thereof: 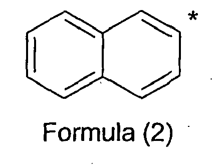 which carries up to 4 substituents, wherein the asterisk (*) represents the point of attachment of the naphthyl group to the -N=N- group in the compound of Formula (1).

Each A group may independently be substituted with one or more substituents.

### Substituents

Preferred optional substituents which may be attached to the group represented by A include optionally substituted alkyl, alkoxy, amine, amide, ester, ketone and thioether groups, halo, acid, hydroxy, nitro, cyano, azo and -CF₃ groups.

Preferably, the optionally substituted alkyl group is a C₁₋₈ alkyl group, more preferably an optionally substituted C₁₋₄ alkyl group.

Preferably, the optionally substituted alkoxy group is a C₁₋₈-alkoxy group, more preferably an optionally substituted C₁₋₄-alkoxy group.

Preferably, the optionally substituted amine group is of the formula -NR¹R² wherein R¹ and R² are each independently H or optionally substituted alkyl, aryl or heteroaryl, or R¹ and R² together with the nitrogen atom to which they are attached form an optionally substituted 5- or 6- membered ring (e.g. a piperidine, pyrrolidone, pyridine, piperizine or morpholine ring).

Preferably, the optionally substituted amide group is of the formula -NHC(O)NR¹R², -C(O)NR¹R², -S(O)₂NR¹R² or -NHC(O)R³, wherein R³ is H or optionally substituted alkyl, aryl or heteroaryl and R¹ and R² are as hereinbefore defined.

Preferred optionally substituted ester groups are of the formula -C(O)OR⁴ or -S(O)₂OR⁴, wherein R⁴ is optionally substituted alkyl, aryl or heteroaryl.

Preferred optionally substituted ketone groups are of the formula -C(O)R⁴ wherein R⁴ is as hereinbefore defined.

Preferred optionally substituted thioether groups are of the formula -SR⁴, wherein R⁴ is as hereinbefore defined.

Optionally substituted alkyl, alkoxy, amine, amide, ester, ketone or thioether substituents may be substituted with one or more halo, amino, C₁₋₄-alkoxy, hydroxy, sulfonic acid, carboxylic acid and phosphonic acid groups.

Preferred halo groups are Cl, F and Br.

Preferred acid groups include carboxylic acid, phosphonic acid and especially sulfonic acid.

Preferably, A is substituted with at least one sulfonic acid group.

More preferably, A is substituted with from 1 to 3, especially 2 or 3 and more especially 2 sulfonic acid groups.

Preferably, A is a naphthyl group substituted with from 1 to 3 sulfonic acid groups.

Preferably, A has no substituents other than sulfonic acid groups.

Preferably, A is of Formulae (3), (4) or (5) or a salt thereof: 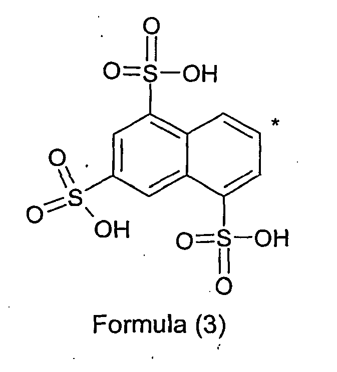 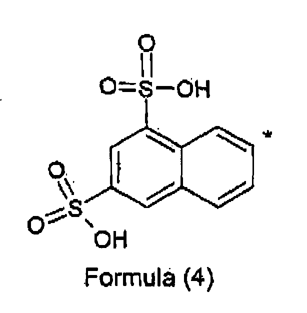 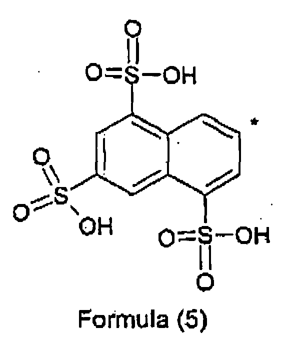 wherein the asterisk (*) represents the point of attachment to the -N=N-group.

### B

The groups represented by B may be different but are preferably the same.

Preferably; at least one of the groups represented by B is arylene, more preferably all the groups represented by B are arylene.

The arylene group may be either polycyclic (e.g. naphthylene) or more preferably monocyclic (e.g. phenylene).

Preferably, each B independently is optionally substituted naphthylene or phenylene, more preferably all the groups represented by B are optionally substituted phenylene.

Preferably, at least one of the groups represented by B is attached to its -N=N- and -NR^{a}- group in the compound of Formula (1) in the para position. Preferably, all of the B groups are attached to their -N=N- and -NR^{a}- groups in the para position.

When B is a heteroarylene group, it preferably comprises a phenylene ring condensed with a 5- or 6- membered ring containing one or more nitrogen, sulphur, oxygen or phosphorus atoms in the 5- or 6- membered ring (e.g. an indole group).

Each B may independently be substituted with one or more substituents.

The substituents may be any of those hereinbefore described for the group represented by A.

The optional substituents which may be present on B are preferably selected from C₁₋₄-alkoxy (especially methoxy and ethoxy), C₁₋₄-alkyl (especially methyl), -NHCONH₂, -NHSO₂-C₁₋₄-alkyl (especially -NHSO₂CH₃), carboxylic acid, sulfonic acid and phosphonic acid.

We have found that when B is substituted with at least one carboxylic acid group particularly good colorants for ink jet printing are obtained.

Preferably all the groups represented by B have at least one carboxylic acid group attached thereto.

In a preferred embodiment, at least one of the group(s) represented by B has one or two carboxylic acid groups in an ortho position with respect to the -NR^{a}- group in the compound of Formula (1). Such compounds have been found to have enhanced hydrolytic stability at the amide group(s).

More preferably, all the group(s) represented by B have one or two carboxylic acid group in an ortho positions with respect to the -NR³- groups in the compound of Formula (1).

Preferably, all the groups represented by B are of Formula (6) or a salt thereof: 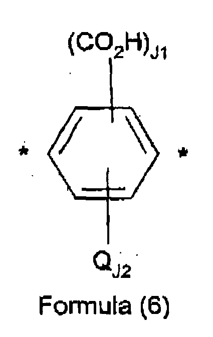 wherein the asterisks represent the points of attachment to the -N=N- and -NR^{a}- groups, J1 is from 1 to 4, each Q is independently any of the substituents hereinbefore described for the group represented by A except a carboxylic acid group and J2 is from 0 to 4 - J1. Preferably, one or two of the carboxylic acid group(s) in the phenylene group of Formula (6) are in an ortho position with respect to the groups represented by -NR^{a}- in the compound of Formula (1).

### R^{a}

The R^{a} groups may be different but are preferably the same.

Preferably, each R^{a} group independently is H or optionally substituted C₁₋₄-alkyl, more preferably all the R^{a} groups are H. Each R^{a} group may be substituted with one or more substituents. These substituents may be any of the substituents hereinbefore described for the group represented by A.

### L

The group represented by L preferably is or comprises, a C₁₋₃₀, more preferably a C₆₋₁₀ organic group.

Preferably, L is or comprises a heteroaromatic or more preferably an aromatic ring.

More preferably, L is or comprises a benzene ring.

L is preferably a phenylene ring para coupled to the two carbonyl groups in the compound of Formula (1).

L may be optionally substituted with any of the substituents hereinbefore described for the group represented by A.

L is not substituted with any azo groups, In one embodiment L has one or more carboxylic acid groups attached thereto wherein one or more of these carboxylic acid groups are separated from one or more of the C=O groups present in the compound of Formula (1) by two carbon atoms. In this embodiment the two carbon atoms may be aliphatic in nature, however more preferably the two carbon atoms form part of an aromatic or heteroaromatic ring, When L is an aromatic (especially benzene) or heteroaromatic group it is preferred that L has one or two carboxylic acid groups present in at least one of the positions which is ortho to the carbonyl groups present in the compound of Formula (1).

### B

In a preferred embodiment all the carboxylic acid groups present in the compound of Formula (1) are attached to one or more of the B groups.

### Same groups

Preferably, all the groups represented by A are the same, all the groups represented by B are the same and all the groups represented by R^{a} are the same.

### Compounds

According to a second aspect of the present invention there is provided a compound of Formula (1) or a salt thereof: 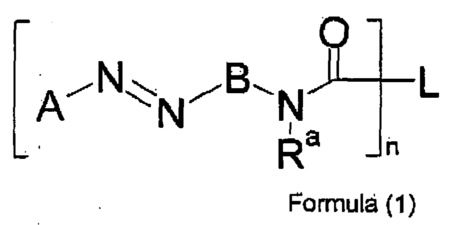 wherein:
- A and X: independently are optionally substituted aryl or Heteroaryl;
- B: is optionally substituted arylene or heteroarylene;
- L: is an organic linking group;
- R^{a} and R^{b}: independently are H, optionally substituted alkyl or optionally substituted aryl;
- n: is 2;
the compound of Formula (1) has only 2 azo groups and contains at least one carboxylic acid group and one or more of the carboxylic acid group(s) are attached to the compound of Formula (1) in one or more of the groups represented by B in an ortho position witch respect to the -NR^{a}- group.

The compound of Formula (1) or a salt thereof has at least one carboxylic acid attached to the group represented by B as hereinbefore described. In a particularly preferred embodiment, every A group is a 2-naphthyl group substituted with from 1 to 3 sulfonic acid groups, every B group is a para phenyl group, at least one of the groups selected from those represented by B has at least one carboxylic acid group directly attached thereto, L is or comprises a benzene ring and every R^{a} group is H

In a preferred embodiment the compound of Formula (1) or a salt thereof is of Formulae (8), (10) or (12) or salts thereof:

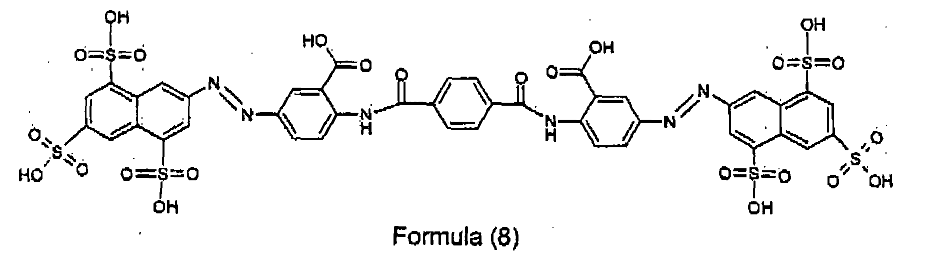

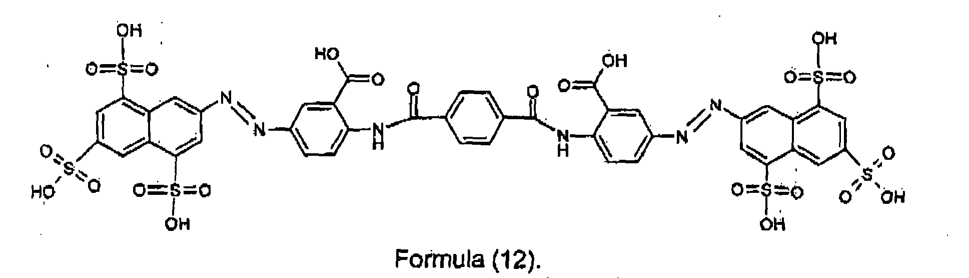

The compounds of Formulae (8), (10) and (12) and salts thereof have especially good ozone fastness and hydrolytic stability.

Further examples the compounds of Formula (1) or salts thereof include those of Formula (13) and salts thereof:

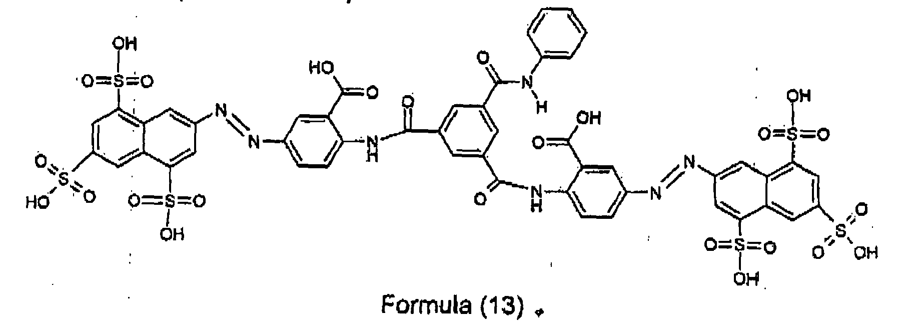

The compounds of Formulae (1) to (8), (10), (12) and (13) exist in tautomeric forms other than those shown in this specification and any such tautomers are included within the scope and claims of the present invention.

The compound of Formula (1) or a salt thereof encompasses the compounds in the protonated and salt forms. Accordingly, when the compound of Formula (1) contains groups such as sulfonic acid, phosphonic acid or carboxylic acid these may be in the form of the free acid (e.g. -SO₃H) or in the form of a salt (e.g. -SO₃Na).

The salt form is preferred over the free acid form.

Preferred salt forms are water-soluble, for example alkali metal salts (especially lithium, sodium, potassium), ammonium, substituted ammonium and mixed salts thereof.

Preferred ammonium and substituted ammounium salts are ammonium and alkyl or aryl substituted ammonium (e.g. ammonium, alkanolammonium, pyridinium, piperidinium and morpholinium).

It is especially preferred that the compounds of Formula (1) or a salt thereof are in the form of a sodium, lithium, potassium or ammonium salt or a mixture thereof.

Preferably, the compound of Formula (1) or a salt thereof has from 1 to 10, more preferably from 2 to 6 and especially from 3 to 5 groups selected from sulfonic acid, and phosphonic acid groups.

Preferably, the compound of Formula (1) or a salt thereof has no more than 10, more preferably no more than 8 and especially no more than 6 carboxylic acid groups.

Preferbbly, the compound of Formula (1) or a salt thereof has from 1 to 4, more preferably from 1 to 2 carboxylic acid groups.

None of the groups represented by A, B, L or R^{a} has an azo substituent attached thereto.

The compound of Formula (1) or a salt thereof has 2 azo groups.

Preferably, the compound of Formula (1) or a salt thereof is a dye, more preferably a dye which is soluble in the medium, especially preferably a water-soluble dye.

Preferably, the compound of Formula (1) or a salt thereof is yellow, orange or brown in colour. Preferably, inks containing about 5% by weight of the compound of Formula (1) are yellow in colour.

The compounds and salts thereof as defined in the first aspect of the present invention are useful for preparing inks (especially aqueous IJP inks). These aqueous IJP inks, exhibit particularly good hydrolytic stability as well as providing prints which have good ozone and light fastness. Many of the compounds of Formula (1) have a bright and vivid yellow shade which is ideal as the yellow ink in a trichromatic printing ink set (Cyan, Yellow, Magenta).

The compound of Formula (1) or a salt thereof preferably has no fibre reactive groups because such groups tend to reduce the long-term storage stability of inks. The term fibre reactive group is well understood in the art and is used for example in EP 0356014 A1. Fibre reactive groups are capable, under suitable conditions, of reacting with the hydroxy groups present in cellulosic fibres or with the amino groups present in natural fibres to form a covalent linkage between the fibre and the compound. Examples of fibre reactive groups which are preferably not present in the compounds of Formula (1) include: halo -1, 3, 5-triazinyl, halo-pyrimidyl, beta-halo-propionyl, beta-halo ethyl-sulphonyl, beta-sulfonic acid ethyl-sulfonyl, beta-halo ethylsulfamyl, chloroacetyl amino, beta-sulfonic acid ethyl sulphamyl and vinyl sulphonyl groups. Preferably, the compound of Formula (1) or a salt thereof is present in a composition which is free from any colorants having reactive fibre reactive groups.

### Preparation of Compounds of Formula (1)

The compounds of Formula (1) and salts thereof may be prepared by the reaction of one or more compounds of Formula (15) or a salt thereof with a compound of Formula (16) or a salt thereof. 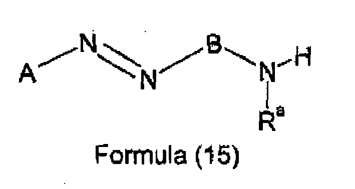 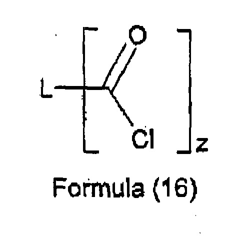 wherein A, B, R^{a} and L are as hereinbefore described and z is 2. The reaction is preferably performed at a pH of from 5 to 7, a temperature of from 0 to 50°C, over a period of from 8 to 30 hours. Preferably, the acid chloride compound of Formula (16) or a salt thereof is added dropwise to the other components.

Many acid chloride compounds of Formula (16) and salts thereof are commercially available. Alternatively, the acid chloride compounds of Formula (16) and salts thereof may readily be prepared by chlorination of the corresponding commercially available carboxylic acid.

The reaction may prepare a single compound of Formula (1) or a salt thereof or a mixture of compounds of Formula (1) or salts thereof which may be used as a mixture or purified to isolate a desired compound.

The reaction is preferably performed in a liquid medium. The solvency of the liquid medium can be chosen such that intermediate compounds (e.g. the reaction of a compound of Formula (15) or a salt thereof with only one of the available acid chloride groups in the compound of Formula (16) or a salt thereof) may precipitate. This facilitates the preparation of asymmetric compounds of Formula (1) and salts thereof which, for example, contain the residues from two or three different compounds of Formula (15) or salts thereof in a more pure form. Alternatively, the reactivity of -NHR^{a} and acid chloride groups may differ such that the reactions tend to form desired products rather than mixtures.

It will be appreciated by those skilled in the art that the Compounds of Formula (1) and salts thereof may also be prepared by the above reaction wherein the acid chlorides or Formula (16) and salts thereof are the analogous carboxylic acids, methyl esters of carboxylic acid, acid anhydrides etc.

The compound of Formula (15) or a salt thereof is preferably prepared by diazotising a compound of Formula A-NH_{z} to give a diazonium salt and coupling the resultant diazonium salt with a compound of Formula B-NR^{a}H, wherein A, B and R^{a} are as hereinbefore defined.

The diazotisation is preferably performed at a temperature below 20°C, more preferably at a temperature from 0°C to 5°C. Preferably, the diazotisation is performed in a liquid comprising water, preferably having a very acidic pH (below 3). Mineral acids (e.g. HCl or H₂SO₄ or mixtures thereof) are typically used to achieve such an acidic pH.

The coupling reaction is preferably performed at a temperature of from 0 to 5°C, typically for a period of 1 to 6 hrs. It is often desirable to add a buffer (e.g. sodium acetate) to adjust the pH to 4 to 5. The coupling reaction is preferably performed in a liquid comprising water. The coupling reaction is preferably continued for a further period of 16 hours at a temperature of 25°C.

### Medium for the ink

The medium for the ink may be a low melting point solid medium, but is preferably a liquid medium. Preferably, the medium is liquid at a temperature of 25°C.

Preferred liquid media include water, a mixture of water and an organic solvent and an organic solvent free from water.

Preferably, the liquid medium is or comprises water.

When the liquid medium is or comprises water it is preferred that the conductivity of the ink is less than 50µS/cm, more preferably less than 20µS/cm, especially less than 10µS/cm and most especially less than 5µS/cm. Preferably, the conductivity of the ink is measured when the ink contains 5% by weight in total of compounds of formula (1) or salts thereof according to the second aspect of the present invention. Such a low conductivity helps to prevent kogation of the printer head in thermal ink jet printing. Inks having such a low conductivity can be prepared by for example ultrafiltration.

When the liquid medium comprises a mixture of water and an organic solvent, the weight ratio of water to organic solvent is preferably from 99:1 to 1:99, more preferably from 99:1 to 50:50 and especially from 95:5 to 70:30.

It is preferred that the organic solvent present in the mixture of water and organic solvent is a water-miscible organic solvent or a mixture of such solvents. Preferred water-miscible organic solvents include C₁₋₆-alkanols, preferably methanol, ethanol, n-propanol, isopropanol, n-butanol, sec-butanol, tert-butanol, n-pentanol, cyclopentanol and cyclohexanol; linear amides, preferably dimethylformamide or dimethylacetamide; ketones and ketone-alcohols, preferably acetone, methyl ether ketone, cyclohexanone and diacetone alcohol; water-miscible ethers, preferably tetrahydrofuran and dioxane; diols, preferably diols having from 2 to 12 carbon atoms, for example pentane-1,5-diol, ethylene glycol, propylene glycol, butylene glycol, pentylene glycol, hexylene glycol and thiodiglycol and oligo- and poly-alkyleneglycols, preferably diethylene glycol, triethylene glycol, polyethylene glycol and polypropylene glycol; triols, preferably glycerol and 1,2,6-hexanetriol; mono-C₁₋₄-alkyl ethers of diols, preferably mono-C₁₋₄-alkyl ethers of diols having 2 to 12 carbon atoms, especially 2-methoxyethanol, 2-(2-methoxyethoxy)ethanol, 2-(2-ethoxyethoxy)-ethanol, 2-[2-(2-methoxyethoxy)ethoxy]ethanol, 2-[2-(2-ethoxyethoxy)-ethoxy]-ethanol and ethyleneglycol monoallylether; cyclic amides, preferably 2-pyrrolidone, N-methyl-2-pyrrolidone, N-ethyl-2-pyrrolidone, caprolactam and 1,3-dimethylimidazolidone; cyclic esters, preferably caprolactone; sulphoxides, preferably dimethyl sulphoxide and sulpholane. Preferably, the liquid medium comprises water and 2 or more, especially from 2 to 8, water-miscible organic solvents.

Especially preferred water-miscible organic solvents are cyclic amides, especially 2-pyrrolidone, N-methyl-pyrrolidone and N-ethyl-pyrrolidone; diols, especially 1,5-pentane diol, ethyleneglycol, thiodiglycol, diethyleneglycol and triethyleneglycol; and mono- C₁₋₄-alkyl and di- C₁₋₄-alkyl ethers of diols, more preferably mono- C₁₋₄-alkyl ethers of diols having 2 to 12 carbon atoms, especially 2-methoxy-2-ethoxy-2-ethoxyethanol.

A preferred liquid medium comprises:
(a) from 75 to 95 parts water; and
(b) from 25 to 5 parts in total of one or more organic solvents selected from diethylene glycol, 2-pyrrolidone, thiodiglycol, N-methylpyrrolidone, cyclohexanol, caprolactone, caprolactam and pentane-1,5-diol;
wherein the parts are by weight and the sum of the parts (a) and (b) = 100.

Examples of further suitable ink media comprising a mixture of water and one or more organic solvents are described in US 4,963,189, US 4,703,113, US 4,626,284 and EP 4,251,50A.

When the liquid medium comprises an organic solvent free from water, (i.e. less than 1% water by weight) the organic solvent preferably has a boiling point of from 30° to 200°C, more preferably of from 30° to 150°C, especially from 30 to 125°C. The organic solvent may be water-immiscible, water-miscible or a mixture of such solvents. Preferred water-miscible organic solvents are any of the hereinbefore described water-miscible organic solvents and mixtures thereof. Preferred water-immiscible solvents include, for example, aliphatic hydrocarbons; esters, preferably ethyl acetate; chlorinated hydrocarbons, preferably CH₂Cl₂; and ethers, preferably diethyl ether; and mixtures thereof.

When the liquid medium comprises a water-immiscible organic solvent, preferably a polar solvent is included because this enhances solubility of the compound of Formula (1) in the liquid medium. Examples of polar solvents include C₁₋₄-alcohols and ketones.

In view of the foregoing preferences it is especially preferred that where the liquid medium is an organic solvent free from water it comprises a ketone (especially methyl ethyl ketone) and/or an alcohol (especially a C₁₋₄-alkanol, more especially ethanol or propanol).

The organic solvent free from water may be a single organic solvent or a mixture of two or more organic solvents. It is preferred that when the medium is an organic solvent free from water it is a mixture of 2 to 5 different organic solvents. This allows a medium to be selected which gives good control over the drying characteristics and storage stability of the ink.

Ink media comprising an organic solvent free from water are particularly useful where fast drying times are required and particularly when printing onto non-absorbent substrates, for example plastics, metal and glass.

### Hot-melt inks

Preferably, the low melting point solid is solid at 25°C and melts at a temperature above 50°C. More preferably, the low melting point solid has a melting point in the range from 60°C to 125°C.

Suitable media which melt in this temperature range include long chain fatty acids, sulfonamides or alcohols, preferably those having C₁₈₋₂₄ chains. The compound of Formula (1) or a salt thereof may be dissolved in the low melting point solid or may be finely dispersed in it.

### Additives

The ink may also contain additional components suitable for use in ink jet printing inks, for example viscosity and surface tension modifiers, corrosion inhibitors, biocides, kogation reducing additives and surfactants.

### Printing process

Preferably, the process according to the first aspect of the present invention applies the ink to the substrate by means of an ink jet printer. Preferred ink jet printers include thermal and piezo ink jet printers.

The image printed on the substrate may take the form of text, drawings or photographs and the like.

### Ink

According to a third aspect of the present invention there is provided an ink comprising a compound of Formula (1) or a salt thereof according to the second aspect of the present invention and a medium. The medium is as hereinbefore described.

The medium may be a liquid medium or a low melting point solid medium. Preferably, the ink according to the third aspect of the present invention comprises:
a) from 0.01 to 30 parts of one or more compounds of the Formula (1) or salts thereof; and
b) from 70 to 99.99 parts of a liquid medium or a low melting point solid medium;
wherein all parts are by weight and the number of parts of (a)+(b)=100.

The number of parts of component (a) is preferably from 0.1 to 20, more preferably from 0.5 to 15, and especially from 1 to 10 parts. The number of parts of component (b) is preferably from 99.9 to 80, more preferably from 99.5 to 85, especially from 99 to 90 parts.

Preferably, component (a) is completely dissolved in component (b). Preferably, component (a) has a solubility in component (b) at 20°C of at least 10% by weight relative to the total ink. This allows the preparation of concentrates which may be used to prepare more dilute inks and reduces the chance of the compound of Formula (1) or a salt thereof precipitating if evaporation of the liquid medium occurs during storage.

### Mixed colour inks

The compounds of Formula (1) or salts thereof may be used as the sole colorant in the ink because they often have an attractive yellow shade. The ink can comprise two or more compounds of Formula (1) or salts thereof according to the second aspect of the present invention. If desired, one may combine the present compounds or salts thereof with one or more further colorants, for example, if a different shade is required for a particular end use. The further colorants are preferably dyes.

When a yellow shade is required the further colorants are preferably selected from (but not limited to) yellow colorants such as C.I. Direct Yellow 142; C.I. Direct Yellow 132; C.I. Direct Yellow 86; C.I. Direct Yellow 85; C.I. Direct Yellow 173; and C.I. Acid Yellow 23 and combinations thereof.

The further colorants preferably do not contain any fibre reactive groups.

### Ink characteristics

The viscosity of the ink is preferably less than 50mPa.s, more preferably less that 20mPa.s and especially less than 5mPa.s. The viscosity is preferably measured at a temperature of 25°C. Preferably, the viscosity is measured by means of a cone and plate rheometer at a shear rate corresponding to 100rpm. Preferably, the ink is Newtonian in its viscosity behaviour (i.e. the viscosity is insensitive to shear rate).

Preferably, the ink has been filtered through a filter having an average pore size of less than 10 microns. More preferably the ink has been filtered through a filter having an average pore size of from 10 to 0.2, more preferably from 5 to 1 micron.

Preferably, the ink has a concentration of halide ions of less than 500 parts per million and more preferably less than 100 parts per million. It is especially preferred that the ink has less than 100, more preferably less than 50 parts per million in total of divalent and trivalent metals. Parts per million refer to parts by weight of the relevant ions or metals relative to the total weight of the ink. Any suitable means to remove halide ions and/or di and trivalent metals may be employed, e.g. ion-exchange and ultra-filtration.

Preferably, the ink is aqueous and has a conductivity of less than 50µS/cm. Preferably, the conductivity of the ink is measured at a temperature of 25°C. Low conductivities are preferably achieved by dialysis, ion-exchange or ultra-filtration.

### Substrate

According to a fourth aspect of the present invention there is provided a substrate (preferably paper, an overhead projector slide or a textile material) printed with an ink according to the third aspect of the present invention.

Preferred substrates are those having a receptor layer for the ink. The receptor layer may be porous or non-porous.

### Cartridge

According to a fifth aspect of the present invention there is provided an ink jet printer cartridge comprising a chamber and ink, wherein the ink is present in the chamber and the ink is according to the third aspect of the present invention.

### Use

According to a sixth aspect of the present invention there is provided the use of a compound of Formula (1) or a salt thereof as defined in the first aspect of the present invention or according to the second aspect of the present invention for preparing an aqueous ink (especially an aqueous ink jet printing ink) comprising said compound and water wherein the ink has a conductivity of less than 50µS/cm. Such low conductivity helps to prevent kogation in thermal ink jet printers.

The present invention is illustrated by the following examples wherein all parts are by weight unless otherwise stated.

### Example

### Example 1 : Preparation of Dye (1)

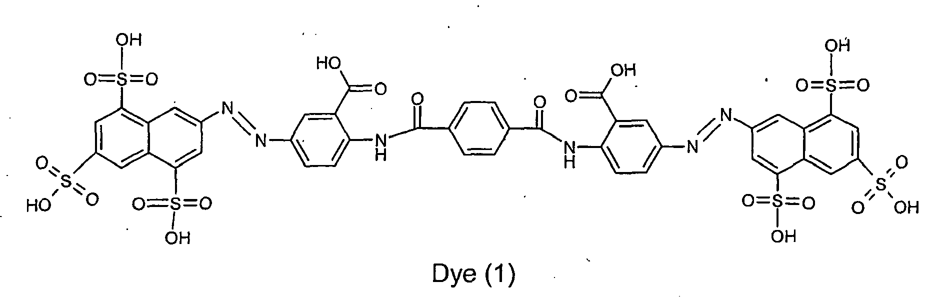

Dye (1) was prepared according to the stages (a) to (c):

### Stage (a): Preparation of Intermediate (1 a)

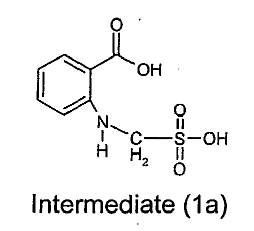

Anthranilic acid (419g, 3.0mol) was added slowly to a solution of formaldehyde/sodium bisulfite addition compound (423g, 3.0mol) in water (1500ml) at a temperature of 40°C to form a reaction mixture.

The reaction mixture was stirred for 16 hours at a temperature of 50°C, then sodium chloride (300g) was added and the reaction mixture was stirred for a further 3 hours whilst allowing the reaction mixture to cool to a temperature of 25°C.

The pH of the reaction mixture was adjusted to 2.5 by the addition of sulphuric acid and the product precipitated. The product was collected by filtration and dried to give 1200g of Intermediate (1 a) in the form of a cream coloured solid.

### Stage (b): Preparation of Intermediate (1 b)

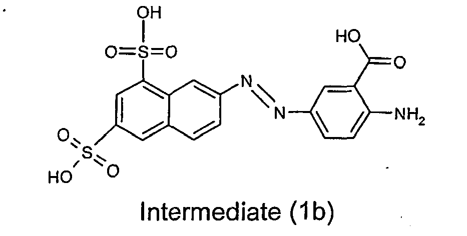

7-aminonaphthalene-1,3-disulfonic acid (303g, 1.0mol) was dissolved in water (1000ml) and this was adjusted to a pH of 7 by the addition of 2N sodium hydroxide solution, then sodium nitrite (76g, 1.1 mol) was added to form a solution.

The above solution was added dropwise to a mixture of concentrated sulphuric acid (300g) and water (500ml) at a temperature of from 0 to 5°C to form a reaction mixture.

The reaction mixture was stirred for a period of 1 hour at a temperature of from 0 to 5°C. Intermediate (1a) from stage (a) (231g, 1.0 mol) was added in portions over a period of 1 hour to the reaction mixture at a temperature of from 0 to 5°C, the pH was adjusted to 4-5 by the addition of sodium acetate. The reaction mixture was then stirred for a further period of 4 hours still at a temperature of from 0 to 5°C and then for 12 hours at a temperature of 25°C.

The product was precipitated by the addition of sodium chloride (200g). The product was collected by filtration and dried.

The dry solid was dissolved in a solution of sodium hydroxide (400g) in water (4000ml) at a temperature of 70°C for a period of 3 hours. This formed a solution. Sodium chloride (400g) was added to the solution which was then stirred for 2 hours whilst allowing the solution to cool to a temperature of 40°C. The product precipitated. The precipitated product was collected by filtration and dried in an oven. This resulted in the preparation of Intermediate (1 b) 463g in the form of an orange solid.

### Stage (c): Preparation of Dye (1)

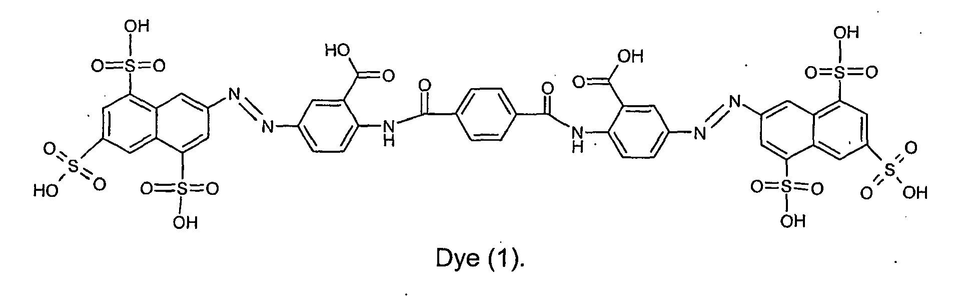

A solution of terephthaloyl chloride (3.7g, 0.018mol) in acetone (200ml) was added dropwise to a solution of Intermediate (1b) (17.9g, 0.039mol) in water (400ml) to form a reaction mixture.

The pH of the reaction mixture was adjusted to 6 by the addition of 2N sodium hydroxide solution. The reaction mixture was stirred for a 24 hours at a temperature of 25°C. The product was precipitated by the addition of sodium chloride (100g). The product was collected by filtration, stirred in acetone (250ml) for a period of 1 hour and then recollected by filtration. The recollected solid was dissolved in water (200ml) which was then adjusted to a pH of 8 to 9 by the addition of 2N sodium hydroxide solution and purified by dialysis in membrane tubing to a conductivity of less than 50µS/m. The water was removed by evaporation at a temperature of 60°C. Dye (1) was obtained in the form of an orange powder.

Dye (1) may be used to prepare aqueous ink jet printing inks which are particularly resistant to hydrolysis. Aqueous inks containing Dye (1) also had good ozone fastness, light fastness and were a vivid, bright yellow colour.

### Inks

The inks described in Tables I and II may be prepared wherein the Dye described in the first column is the Dye made in Example 1. Numbers quoted in the second column onwards refer to the number of parts of the relevant ingredient and all parts are by weight. The inks may be applied to paper by thermal or piezo ink jet printing.

The following abbreviations are used in Table I and II:
- PG =: propylene glycol
- DEG =: diethylene glycol
- NMP =: N-methyl pyrrolidone
- DMK =: dimethylketone
- IPA =: isopropanol
- MEOH =: methanol
- 2P =: 2-pyrrolidone
- MIBK =: methylisobutyl ketone
- P12 =: propane-1,2-diol
- BDL =: butane-2,3-diol
- CET=: cetyl ammonium bromide
- PHO =: Na₂HPO₄ and
- TBT =: tertiary butanol
- TDG =: thiodiglycol

**TABLE I**

| Dye | Dye Content | Water | PG | DEG | NMP | DMK | NaOH | Na Stearate | IPA | MEOH | 2P | MIBK |
|---|---|---|---|---|---|---|---|---|---|---|---|---|
| 1 | 2.0 | 80 | 5 | | 6 | 4 | | | | | 5 | |
| 1 | 3.0 | 90 | | 5 | 5 | | 0.2 | | | | | |
| 1 | 10.0 | 85 | 3 | | 3 | 3 | | | | 5 | 1 | |
| 1 | 2.1 | 91 | | 8 | | | | | | | | 1 |
| 1 | 3.1 | 86 | 5 | | | | | 0.2 | 4 | | | 5 |
| 1 | 1.1 | 81 | | | 9 | | 0.5 | 0.5 | | | 9 | |
| 1 | 2.5 | 60 | 4 | 15 | 3 | 3 | | | 6 | 10 | 5 | 4 |
| 1 | 5 | 65 | | 20 | | | | | 10 | | | |
| 1 | 2.4 | 75 | 5 | 4 | | 5 | | | | 6 | | 5 |
| 1 | 4.1 | 80 | 3 | 5 | 2 | 10 | | 0.3 | | | | |
| 1 | 3.2 | 65 | | 5 | 4 | 6 | | | 5 | 4 | 6 | 5 |
| 1 | 5.1 | 96 | | | | | | | | 4 | | |
| 1 | 10.8 | 90 | 5 | | | | | | 5 | | | |
| 1 | 10.0 | 80 | 2 | 6 | 2 | 5 | | | 1 | | 4 | |
| 1 | 1.8 | 80 | | 5 | | | | | | | 15 | |
| 1 | 2.6 | 84 | | | 11 | | | | | | 5 | |
| 1 | 3.3 | 80 | 2 | | | 10 | | | | 2 | | 6 |
| 1 | 12.0 | 90 | | | | 7 | 0.3 | | 3 | | | |
| 1 | 5.4 | 69 | 2 | 20 | 2 | 1 | | | | | 3 | 3 |
| 1 | 6.0 | 91 | | | 4 | | | | | | 5 | |

**TABLE II**

| Dye | Dye Content | Water | PG | DEG | NMP | CET | TBT | TDG | BDL | PHO | 2P | P12 |
|---|---|---|---|---|---|---|---|---|---|---|---|---|
| 1 | 3.0 | 80 | 15 | | | 0.2 | | | | | 5 | |
| 1 | 9.0 | 90 | | 5 | | | | | | 1.2 | | 5 |
| 1 | 1.5 | 85 | 5 | 5 | | 0.15 | 5.0 | 0.2 | | | | |
| 1 | 2.5 | 90 | | 6 | 4 | | | | | 0.12 | | |
| 1 | 3.1 | 82 | 4 | 8 | | 0.3 | | | | | | 6 |
| 1 | 0.9 | 85 | | 10 | | | | | 5 | 0.2 | | |
| 1 | 8.0 | 90 | | 5 | 5 | | | 0.3 | | | | |
| 1 | 4.0 | 70 | | 10 | 4 | | | | 1 | | 4 | 11 |
| 1 | 2.2 | 75 | 4 | 10 | 3 | | | | 2 | | 6 | |
| 1 | 10.0 | 91 | | | 6 | | | | | | 3 | |
| 1 | 9.0 | 76 | | 9 | 7 | | 3.0 | | | 0.95 | 5 | |
| 1 | 5.0 | 78 | 5 | 11 | | | | | | | 6 | |
| 1 | 5.4 | 86 | | | 7 | | | | | | 7 | |
| 1 | 2.1 | 70 | 5 | 5 | 5 | 0.1 | 0.2 | 0.1 | 5 | 0.1 | 5 | |
| 1 | 2.0 | 90 | | 10 | | | | | | | | |
| 1 | 2 | 88 | | | | | | 10 | | | | |
| 1 | 5 | 78 | | | 5 | | | 12 | | | 5 | |
| 1 | 8 | 70 | 2 | | 8 | | | 15 | | | 5 | |
| 1 | 10 | 80 | | | | | | 8 | | | 12 | |
| 1 | 10 | 80 | | 10 | | | | | | | | |

## Claims

1. A process for printing an image on a substrate comprising applying to the substrate an ink comprising a medium and compound of Formula (1) or a salt thereof: 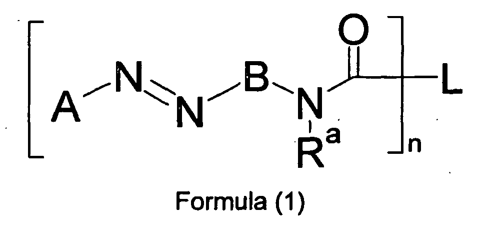 wherein:
A and X independently are optionally substituted aryl or heteroaryl;
B is optionally substituted arylene or heteroarylene;
L is an organic linking group;
R^{a} and R^{b} independently are H, optionally substituted alkyl or optionally substituted aryl;
n is 2;
the compound of Formula (1) has only 2 azo groups and contains at least one carboxylic acid group and one or more of the carboxylic acid group(s) are attached to the compound of Formula (1) in one or more of the groups represented by B in an ortho position with respect to the -NR^{a}- group.

2. A process according to claim 1 wherein at least one of the group(s) represented by B has one or two carboxylic acid groups in an ortho position with respect to the -NR^{a}- group in the compound of Formula (1).

3. A process according to claim 1 wherein all the groups represented by A are the same, all the groups represented by B are the same and all the groups represented by R^{a} are the same.

4. A process according to any one of the preceding claims wherein each group represented by A is naphthyl.

5. A process according to any one of the preceding claims wherein all the groups represented by B are optionally substituted phenylene.

6. A process according to any one of the preceding claims wherein all the groups represented by B are of Formula (6) or a salt thereof: 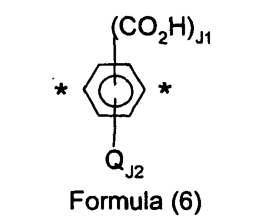 wherein the asterisks represent the points of attachment to the -N=N- and -NR^{a}- groups, J1 is from 1 to 4, each Q is independently an optionally substituted alkyl, alkoxy, amine, amide, ester, ketone or thioether group, or a halo, acid, hydroxy, nitro, cyano or -CF₃ group but not a carboxylic acid group and J2 is from 0 to 4-J1.

7. A process according to any one of the preceding claims wherein each group represented by A is substituted with from 1 to 3 sulfonic acid groups.

8. A process according to any one of the preceding claims wherein the compound of Formula (1) or a salt thereof has no fibre reactive groups.

9. A process according to any one of the preceding claims wherein the compound of Formula (1) is of Formulae (8), (10) or (12) or salts thereof.

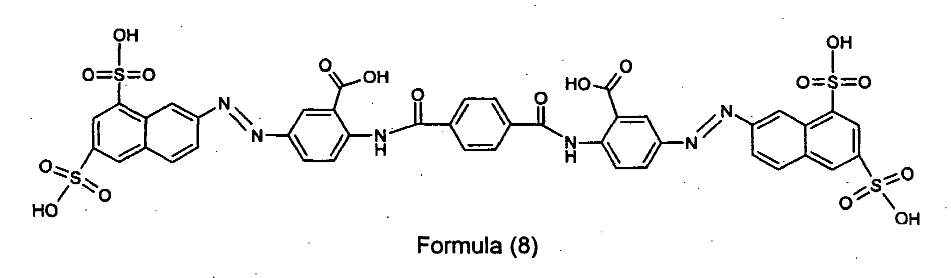

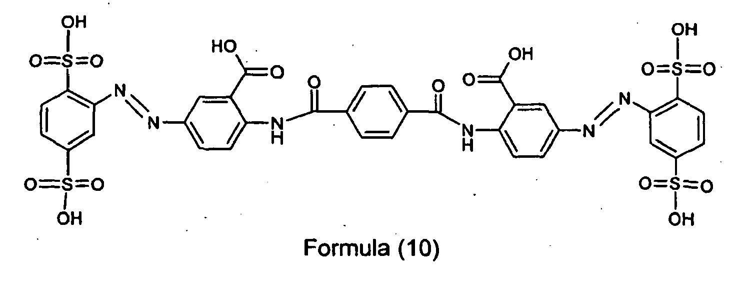

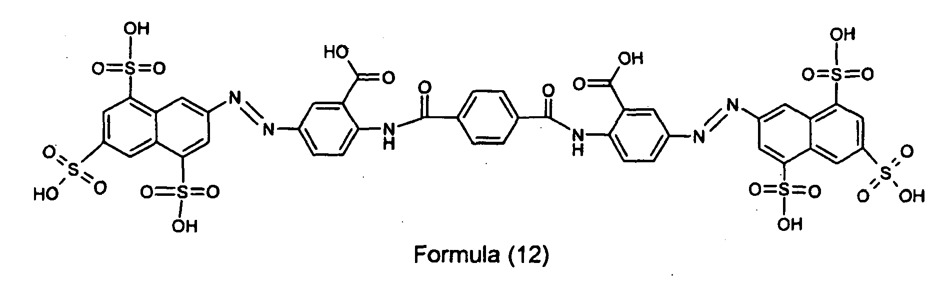

10. A process according to any one of the preceding claims wherein the compound of Formula (1) or a salt thereof is in the form of a salt.

11. A process according to any one of the preceding claims wherein the ink is applied to the substrate by means of an ink jet printer.

12. A compound of Formula (1) or a salt thereof: 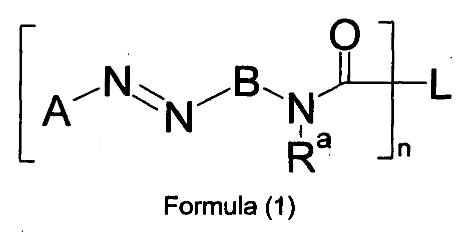 wherein:
A and X independently are optionally substituted aryl or heteroaryl;
B is optionally substituted arylene or heteroarylene;
L is an organic linking group;
R^{a} and R^{b} independently are H, optionally substituted alkyl or optionally substituted aryl;
n is 2;
the compound of Formula (1) has only 2 azo groups and contains at least one carboxylic acid group and one or more of the carboxylic acid group(s) are attached to the compound of Formula (1) in one or more of the groups represented by B in an ortho position with respect to the -NR^{a}- group.

13. A compound or a salt thereof according to claim 12 wherein L is or comprises a benzene ring.

14. A compound or a salt thereof according to claims 12 or 13 which has no fibre reactive groups.

15. A compound or salt thereof according to any one of claims 12 to 14 wherein A is a naphthyl group of Formula (2) or a salt thereof: 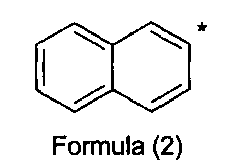 which carries up to 4 substituents, wherein the asterisk (*) represents the point of attachment of the naphthyl group to the -N=N- group in the compound of Formula (1).

16. A compound or salt thereof according to claim 12 which is of any one of Formulae (8), (10) or (12) or salts thereof:

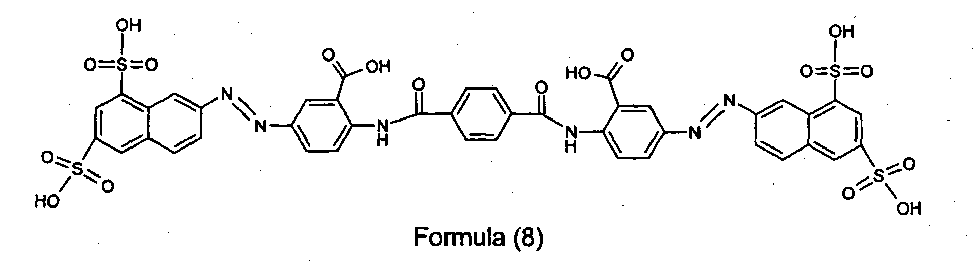

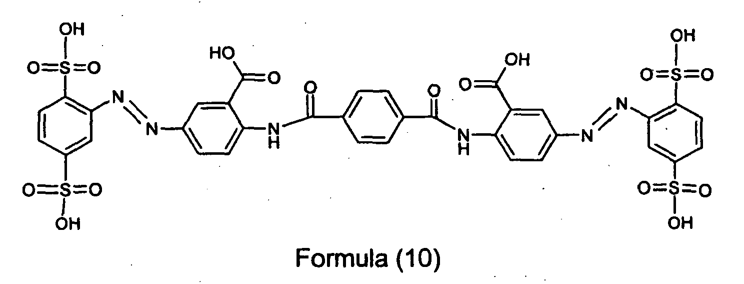

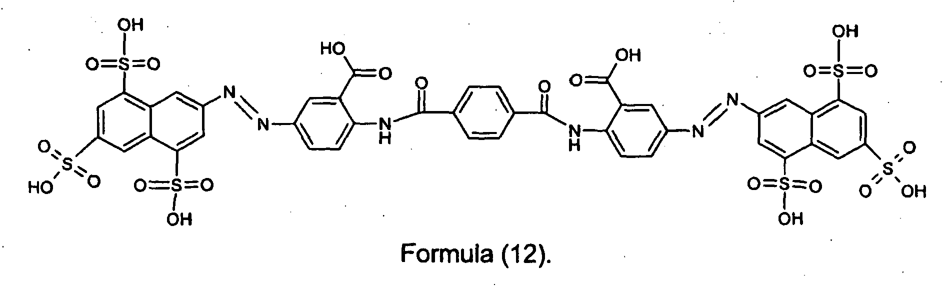

17. A compound or salt thereof according to claim 12 wherein all the groups represented by A are the same, all the groups represented by B are the same and all the groups represented by R^{a} are the same.

18. A compound or salt thereof according to any one of claims 12 to 17 in the form of a salt.

19. An ink comprising a compound or a salt thereof according to any one of claims 12 to 18 and a medium.

20. An ink according to claim 19 wherein the medium is a liquid.

21. A substrate printed with an ink according to claim 19 or 20.

22. An ink jet printer cartridge comprising a chamber and ink, wherein the ink is present in the chamber and the ink is according to claim 19 or 20.

23. Use of a compound of Formula (1) or a salt thereof for preparing an aqueous ink comprising said compound and water: 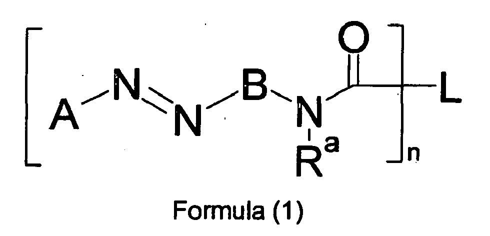 wherein:
A and X independently are optionally substituted aryl or heteroaryl;
B is optionally substituted arylene or heteroarylene;
L is an organic linking group;
R^{a} and R^{b} independently are H, optionally substituted alkyl or optionally substituted aryl;
n is 2;
the compound of Formula (1) has only 2 azo groups and contains at least one carboxylic acid group and one or more of the carboxylic acid group(s) are attached to the compound of Formula (1) in one or more of the groups represented by B in an ortho position with respect to the -NR^{a}- group;
and the ink has a conductivity of less than 50µS/cm.

## Patentansprüche

1. Verfahren zur druckmäßigen Bebilderung eines Substrats, bei dem man dieses mit einer Tinte, umfassend ein Medium und eine Verbindung der Formel (1) oder ein Salz davon: 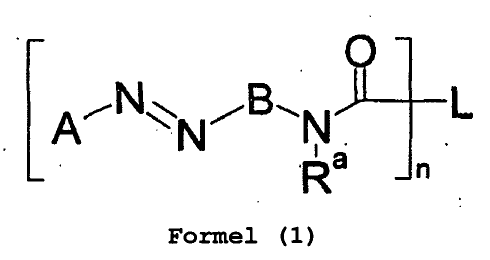 wobei
A und X unabhängig voneinander gegebenenfalls substituiertes Aryl oder Heteroaryl bedeuten,
B gegebenenfalls substituiertes Arylen oder Heteroarylen bedeutet,
L eine organische Verknüpfungsgruppe bedeutet,
R^{a} und R^{b} unabhängig voneinander H, gegebenenfalls substituiertes Alkyl oder gegebenenfalls substituiertes Aryl bedeuten,
n 2 bedeutet,
die Verbindung der Formel (1) nur 2 Azogruppen aufweist und mindestens eine Carbonsäuregruppe enthält und eine oder mehrere der Carbonsäuregruppen mit einer oder mehreren der für B stehenden Gruppen ortho zur Gruppe -NR^{a}- mit der Verbindung der Formel (1) verbunden ist bzw. sind, beaufschlagt.

2. Verfahren nach Anspruch 1, bei dem in der Verbindung der Formel (1) mindestens eine der für B stehenden Gruppen eine oder zwei Carbonsäuregruppe(n) ortho zur Gruppe -NR^{a}- aufweist.

3. Verfahren nach Anspruch 1, bei dem die für A stehenden Gruppen, die für B stehenden Gruppen und die für R^{a} stehenden Gruppen jeweils alle die gleiche Bedeutung haben.

4. Verfahren nach einem der vorhergehenden Ansprüche, bei dem jede für A stehende Gruppe Naphthyl bedeutet.

5. Verfahren nach einem der vorhergehenden Ansprüche, bei dem die für B stehenden Gruppen alle gegebenenfalls substituiertes Phenylen bedeuten.

6. Verfahren nach einem der vorhergehenden Ansprüche, bei dem die für B stehenden Gruppen alle der Formel (6) oder einem Salz davon entsprechen: 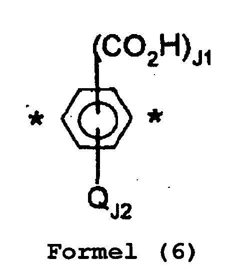 wobei die Sternchen die Verbindungsstellen zu den Gruppen -N=N- und -NR^{a}- markieren, J1 eine Zahl von 1 bis 4 bedeutet, Q jeweils unabhängig voneinander eine gegebenenfalls substituierte Alkyl-, Alkoxy-, Amin-, Amid-, Ester-, Keton- oder Thioethergruppe oder eine Halogen-, Säure-, Hydroxy-, Nitro-, Cyano- oder -CF₃-Gruppe, jedoch keine Carbonsäuregruppe bedeutet und J2 eine Zahl von 0 bis 4-J1 bedeutet.

7. Verfahren nach einem der vorhergehenden Ansprüche, bei dem jede für A stehende Gruppe mit 1 bis 3 Sulfonsäuregruppen substituiert ist.

8. Verfahren nach einem der vorhergehenden Ansprüche, bei dem die Verbindung der Formel (1) oder ein Salz davon keine faserreaktiven Gruppen enthält.

9. Verfahren nach einem der vorhergehenden Ansprüche, bei dem die Verbindung der Formel (1) den Formeln (8), (10) oder (12) oder Salzen davon 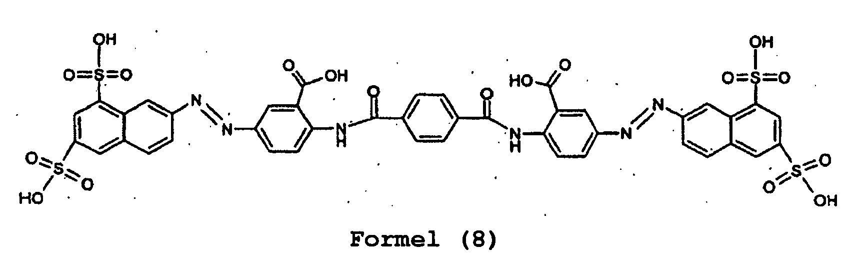 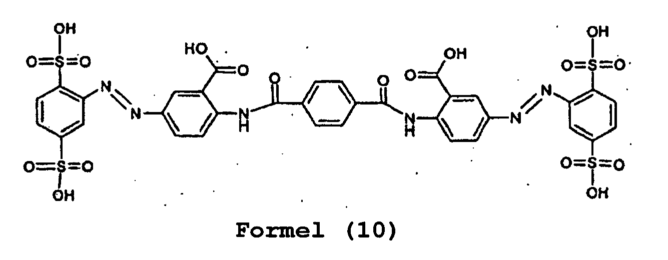 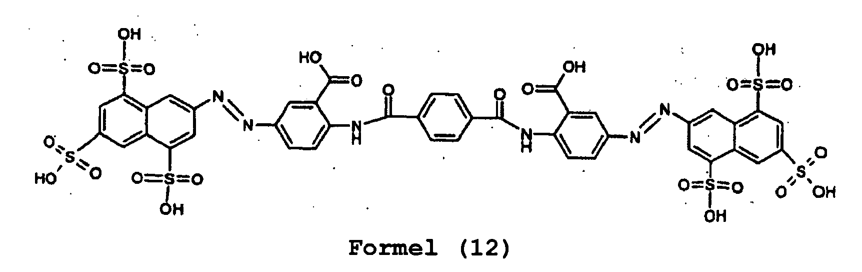 entspricht.

10. Verfahren nach einem der vorhergehenden Ansprüche, bei dem die Verbindung der Formel (1) oder ein Salz davon als Salz vorliegt.

11. Verfahren nach einem der vorhergehenden Ansprüche, bei dem man das Substrat farbstrahldruckermäßig mit der Tinte beaufschlagt.

12. Verbindung der Formel (1) oder ein Salz davon: 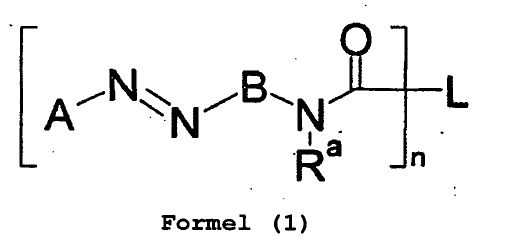 wobei
A und X unabhängig voneinander gegebenenfalls substituiertes Aryl oder Heteroaryl bedeuten,
B gegebenenfalls substituiertes Arylen oder Heteroarylen bedeutet,
L eine organische Verknüpfungsgruppe bedeutet,
R^{a} und R^{b} unabhängig voneinander H, gegebenenfalls substituiertes Alkyl oder gegebenenfalls substituiertes Aryl bedeuten,
n 2 bedeutet,
die Verbindung der Formel (1) nur 2 Azogruppen aufweist und mindestens eine Carbonsäuregruppe enthält und eine oder mehrere der Carbonsäuregruppen mit einer oder mehreren der für B stehenden Gruppen ortho zur Gruppe -NR^{a}- mit der Verbindung der Formel (1) verbunden ist bzw. sind.

13. Verbindung oder deren Salz nach Anspruch 12, bei der bzw. dem L einen Benzolring darstellt oder umfaßt.

14. Verbindung oder deren Salz nach den Ansprüchen 12 oder 13, bei der bzw. dem keine faserreaktiven Gruppen enthalten sind.

15. Verbindung oder deren Salz nach einem der Ansprüche 12 bis 14, bei der bzw. dem A eine Naphthylgruppe der Formel (2) oder ein Salz davon: 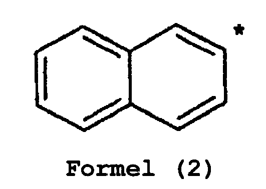 mit bis zu 4 Substituenten bedeutet, wobei das Sternchen (*) die Verbindungsstelle der Naphthylgruppe zur Gruppe -N=N- in der Verbindung der Formel (1) markiert.

16. Verbindung oder deren Salz nach Anspruch 12, entsprechend einer der Formeln (8), (10) oder (12) oder Salzen davon:

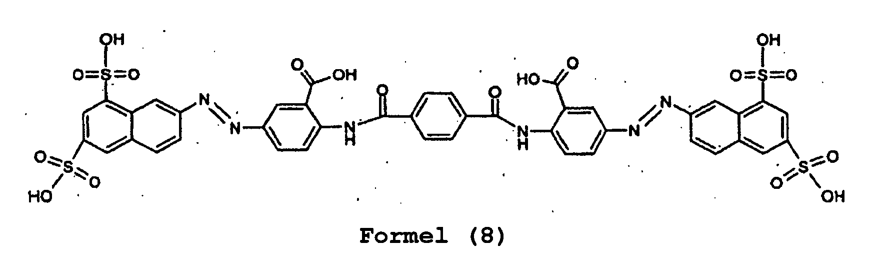

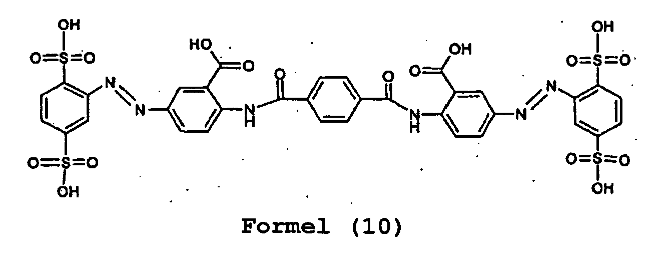

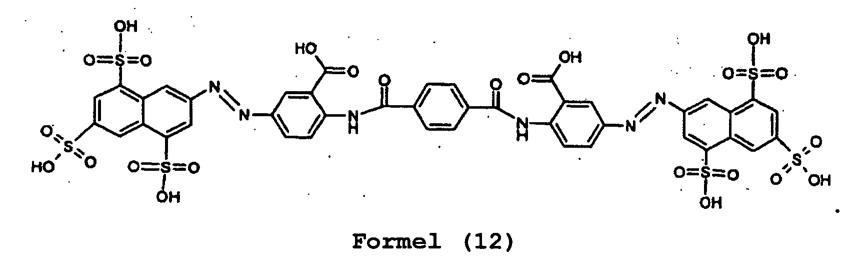

17. Verbindung oder deren Salz nach Anspruch 12, bei der bzw. dem die für A stehenden Gruppen, die für B stehenden Gruppen und die für R^{a} stehenden Gruppen jeweils alle die gleiche Bedeutung haben.

18. Verbindung oder deren Salz nach einem der Ansprüche 12 bis 17 als Salz.

19. Tinte, umfassend eine Verbindung oder deren Salz gemäß einem der Ansprüche 12 bis 18 und ein Medium.

20. Tinte nach Anspruch 19, bei der das Medium eine Flüssigkeit darstellt.

21. Substrat, bedruckt mit einer Tinte gemäß Anspruch 19 oder 20.

22. Farbstrahldruckerpatrone mit Kammer und Tinte, wobei die Tinte in der Kammer enthalten ist und Anspruch 19 oder 20 entspricht.

23. Verwendung einer Verbindung der Formel (1) oder deren Salz zur Herstellung einer wäßrigen Tinte, umfassend jene Verbindung und Wasser: 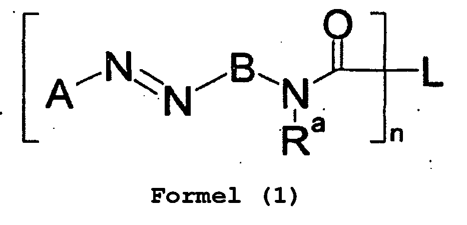 wobei
A und X unabhängig voneinander gegebenenfalls substituiertes Aryl oder Heteroaryl bedeuten,
B gegebenenfalls substituiertes Arylen oder Heteroarylen bedeutet,
L eine organische Verknüpfungsgruppe bedeutet,
R^{a} und R^{b} unabhängig voneinander H, gegebenenfalls substituiertes Alkyl oder gegebenenfalls substituiertes Aryl bedeuten,
n 2 bedeutet,
die Verbindung der Formel (1) nur 2 Azogruppen aufweist und mindestens eine Carbonsäuregruppe enthält und eine oder mehrere der Carbonsäuregruppen mit einer oder mehreren der für B stehenden Gruppen ortho zur Gruppe -NR^{a}- mit der Verbindung der Formel (1) verbunden ist bzw. sind;
und die Tinte eine Leitfähigkeit von weniger als 50 µS/cm aufweist.

## Revendications

1. Procédé d'impression d'une image sur un substrat qui comprend l'application sur le substrat d'une encre qui comprend un milieu et un composé de la formule (1) ou un sel de celui-ci : 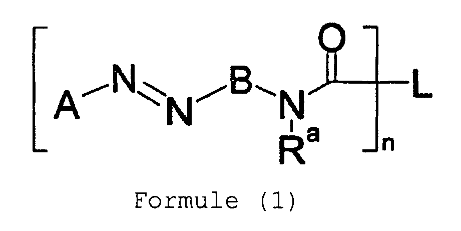 dans laquelle :
A et X représentent indépendamment un groupe aryle ou un groupe hétéroaryle éventuellement substitué ;
B représente un groupe arylène ou un groupe hétéroarylène éventuellement substitué ;
L représente un groupe de liaison organique ;
R^{a} et R^{b} représentent indépendamment un atome H, un groupe alkyle éventuellement substitué ou un groupe aryle éventuellement substitué ;
n vaut 2 ;
le composé de la formule (1) possède seulement deux groupes azo et contient au moins un groupe d'acide carboxylique et un ou plusieurs groupes d'acide carboxylique sont attachés au composé de la formule (1) dans un ou plusieurs des groupes représentés par B dans une position ortho en ce qui concerne le groupe -NR^{a}-.

2. Procédé selon la revendication 1, dans lequel au moins un du ou des groupe(s) représenté(s) par B possède un ou deux groupe(s) d'acide carboxylique à la position ortho en ce qui concerne le groupe -NR^{a}- dans le composé de la formule (1).

3. Procédé selon la revendication 1, dans lequel tous les groupes représentés par A sont identiques, tous les groupes représentés par B sont identiques et tous les groupes représentés par R^{a} sont identiques.

4. Procédé selon l'une quelconque des revendications précédentes, dans lequel chaque groupe représenté par A est un groupe naphtyle.

5. Procédé selon l'une quelconque des revendications précédentes, dans lequel tous les groupes représentés par B sont un groupe phénylène éventuellement substitué.

6. Procédé selon l'une quelconque des revendications précédentes, dans lequel tous les groupes représentés par B sont de la formule (6) ou un sel de celle-ci : 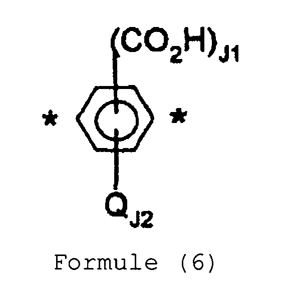 dans laquelle les astérisques représentent les points d'attache aux groupes -N=N- et -NR^{a}-, J1 vaut de 1 à 4, chaque Q représente indépendamment un groupe alkyle, alcoxy, amine, amide, ester, cétone ou thioéther éventuellement substitué, ou un groupe halo, acide, hydroxy, nitro, cyano ou -CF₃, mais pas un groupe d'acide carboxylique, et J2 vaut de 0 à 4 - J1.

7. Procédé selon l'une quelconque des revendications précédentes, dans lequel chaque groupe représenté par A est substitué par un à trois groupes d'acide sulfonique.

8. Procédé selon l'une quelconque des revendications précédentes, dans lequel le composé de la formule (1) ou un sel de celui-ci ne possède pas de groupe réagissant avec des fibres.

9. Procédé selon l'une quelconque des revendications précédentes, dans lequel le composé de la formule (1) est de la formule (8), (10) ou (12), ou un sel de celles-ci.

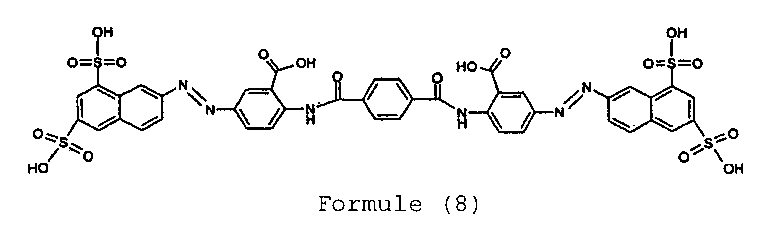

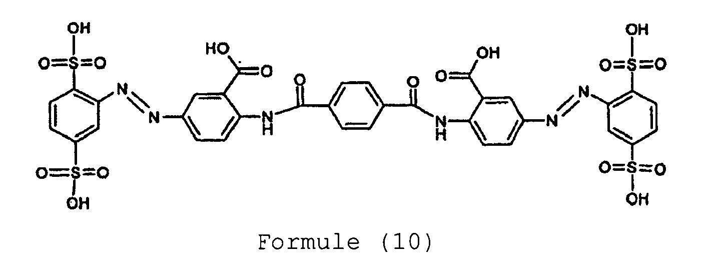

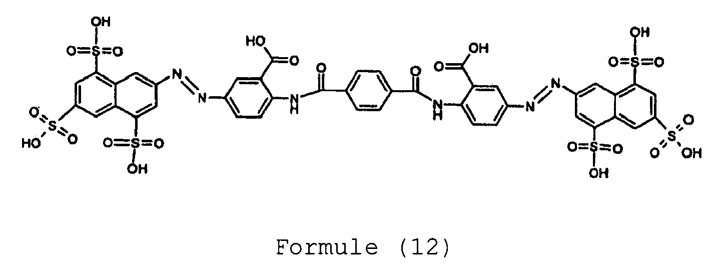

10. Procédé selon l'une quelconque des revendications précédentes, dans lequel le composé de la formule (1) ou un sel de celui-ci est sous la forme d'un sel.

11. Procédé selon l'une quelconque des revendications précédentes, dans lequel l'encre est appliquée au substrat au moyen d'une imprimante à jet d'encre.

12. Composé de la formule (1) ou un sel de celui-ci : 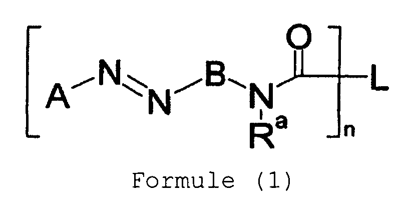 dans laquelle :
A et X représentent indépendamment un groupe aryle ou un groupe hétéroaryle éventuellement substitué ;
B représente un groupe arylène ou un groupe hétéroarylène éventuellement substitué ;
L représente un groupe de liaison organique ;
R^{a} et R^{b} représentent indépendamment un atome H, un groupe alkyle éventuellement substitué ou un groupe aryle éventuellement substitué ;
n vaut 2 ;
le composé de la formule (1) possède seulement deux groupes azo et contient au moins un groupe d'acide carboxylique et un ou plusieurs groupes d'acide carboxylique sont attachés au composé de la formule (1) dans un ou plusieurs des groupes représentés par B dans une position ortho en ce qui concerne le groupe -NR^{a}-.

13. Composé ou sel de celui-ci selon la revendication 12, dans lequel L représente ou comprend un anneau benzénique.

14. Composé ou sel de celui-ci selon la revendication 12 ou 13, lequel ne possède pas de groupe réagissant avec des fibres.

15. Composé ou sel de celui-ci selon l'une quelconque des revendications 12 à 14, dans lequel A est un groupe naphtyle de la formule (2) ou un sel de celui-ci : 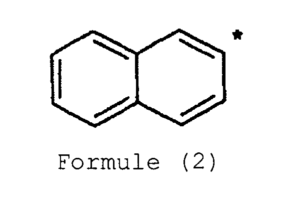 laquelle porte jusqu'à quatre substituants, dans laquelle l'astérisque (*) représente le point d'attache du groupe naphtyle au groupe -N=N- dans le composé de la formule (1).

16. Composé ou sel de celui-ci selon la revendication 12, lequel est de l'une quelconque des formules (8), (10) ou (12) ou un sel de celles-ci :

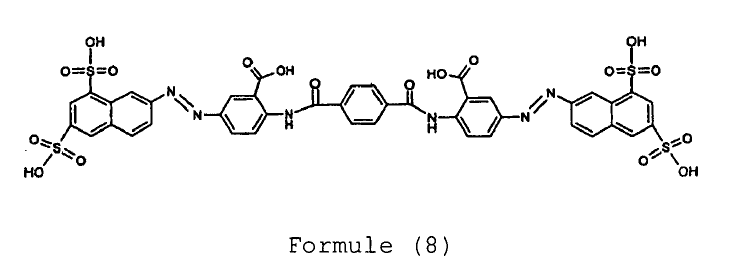

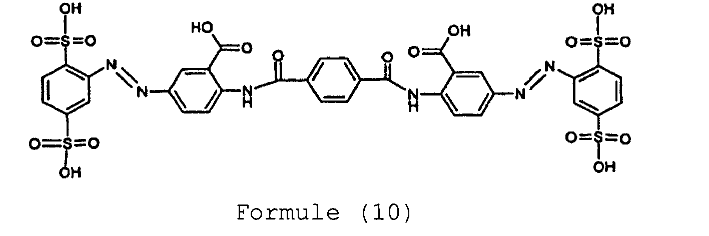

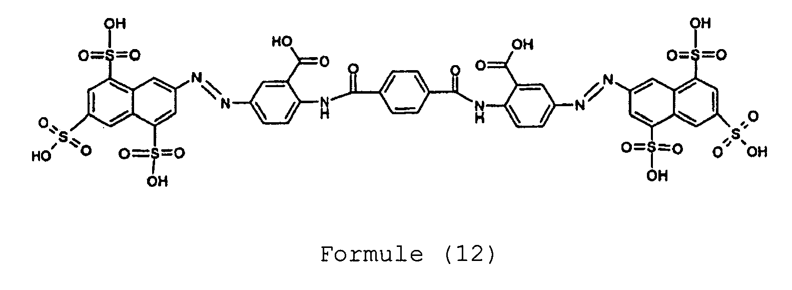

17. Composé ou sel de celui-ci selon la revendication 12, dans lequel tous les groupes représentés par A sont identiques, tous les groupes représentés par B sont identiques et tous les groupes représentés par R^{a} sont identiques.

18. Composé ou sel de celui-ci selon l'une quelconque des revendications 12 à 17 sous la forme d'un sel.

19. Encre comprenant un composé ou un sel de celui-ci selon l'une quelconque des revendications 12 à 18 et un milieu.

20. Encre selon la revendication 19, dans laquelle le milieu est un liquide.

21. Substrat imprimé avec une encre selon la revendication 19 ou 20.

22. Cartouche d'imprimante à jet d'encre comprenant une chambre et une encre, dans laquelle l'encre est présente dans la chambre et l'encre est selon la revendication 19 ou 20.

23. Utilisation d'un composé de la formule (1) ou d'un sel de celui-ci pour la préparation d'une encre aqueuse qui comprend ledit composé et de l'eau : 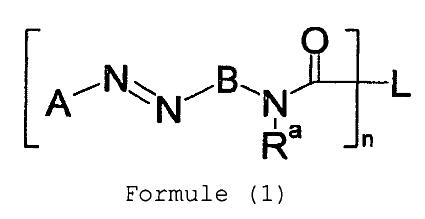 dans laquelle :
A et X représentent indépendamment un groupe aryle ou un groupe hétéroaryle éventuellement substitué ;
B représente un groupe arylène ou un groupe hétéroarylène éventuellement substitué ;
L représente un groupe de liaison organique ;
R^{a} et R^{b} représentent indépendamment un atome H, un groupe alkyle éventuellement substitué ou un groupe aryle éventuellement substitué ;
n vaut 2 ;
le composé de la formule (1) possède seulement deux groupes azo et contient au moins un groupe d'acide carboxylique et un ou plusieurs groupes d'acide carboxylique sont attachés au composé de la formule (1) dans un ou plusieurs des groupes représentés par B dans une position ortho en ce qui concerne le groupe -NR^{a}- ;
et l'encre possède une conductivité inférieure à 50 µS/cm.
